# EUROPÄISCHE PATENTSCHRIFT

(11) **EP 0 828 956 B1**
(45) Veröffentlichungstag und Bekanntmachung des Hinweises auf die Patenterteilung: **04.08.1999**
(21) Anmeldenummer: 96919728.4
(22) Anmeldetag: 09.05.1996
(51) Int. Cl.: F16H 61/00, F16H 61/12

(54) **HYDRAULIKNOTSTEUERUNG FÜR EINE ÜBERSETZUNGSABHÄNGIGE ÄNDERUNG DER HYDRAULIKÖLDRÜCKE IN DEN HYDRAULISCHEN KEGELSCHEIBENAXIALVERSTELLUNGEN EINES STUFENLOSEN UMSCHLINGUNGSGETRIEBES**
HYDRAULIC EMERGENCY CONTROL FOR TRANSMISSION RATIO-DEPENDENT VARIATION OF THE HYDRAULIC OIL PRESSURE IN THE HYDRAULIC CONICAL PULLEY AXIAL ADJUSTMENT MECHANISMS OF A CONTINUOUSLY VARIABLE TRANSMISSION
COMMANDE HYDRAULIQUE D'URGENCE PERMETTANT DE MODIFIER EN FONCTION DU RAPPORT DE TRANSMISSION LA PRESSION D'HUILE HYDRAULIQUE DANS LES MECANISMES HYDRAULIQUES D'AJUSTEMENT AXIAL DES POULIES CONIQUES D'UNE TRANSMISSION A VARIATION CONTINUE

(30) Priorität: 24.05.1995 DE 19519162
(43) Veröffentlichungstag der Anmeldung: 18.03.1998
(73) Patentinhaber: ROBERT BOSCH GMBH, 70442 Stuttgart (DE); Van Doorne's Transmissie B.V., NL-5000 AM Tilburg (NL)
(72) Erfinder: SPIESS, Ewald, D-71665 Vaihingen (DE); HÄCKER, Hans, D-74343 Sachsenheim (DE); LUH, Joachim, D-74321 Bietigheim-Bissingen (DE); BAUERLE, Peter, D-71636 Ludwigsburg (DE); PELDERS, Hendrikus, A., A., W., NL-5231 PK's-Hertogenbosch (NL); VAN WIJK, Wilhelmus, J., M., NL-5071 AN Udenhout (NL)
(86) Internationale Anmeldenummer: EP9601947
(87) Internationale Veröffentlichungsnummer: WO9637717

(56) Entgegenhaltungen:
- EP-A- 0 027 672
- DE-A- 4 410 311

## Beschreibung

### Stand der Technik

Die Erfindung geht von einer Hydrauliknotsteuerung nach dem Oberbegriff des Hauptanspruchs aus.

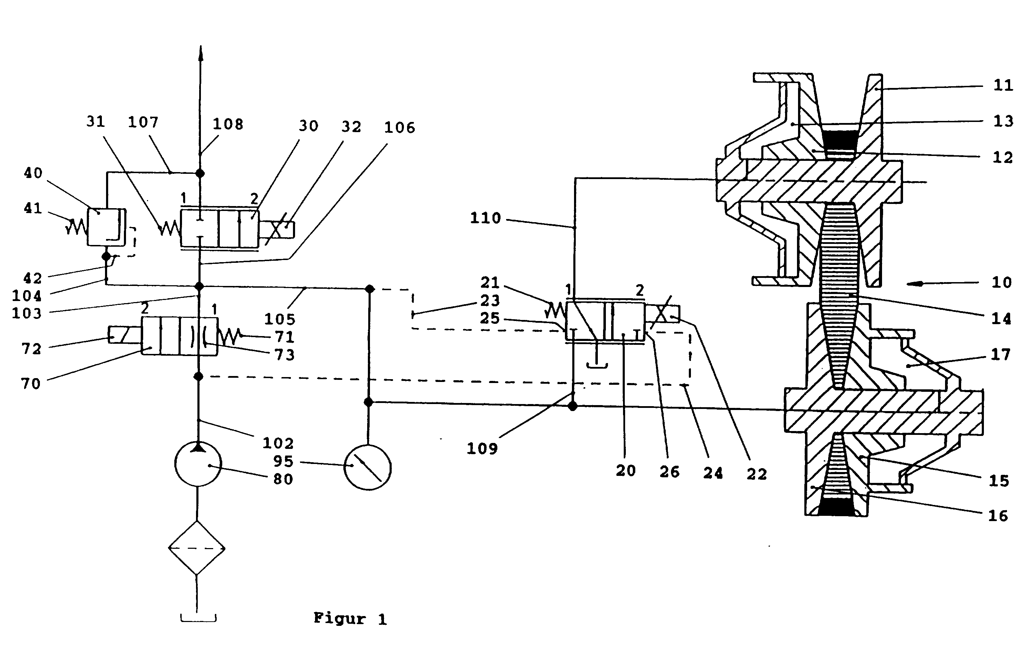

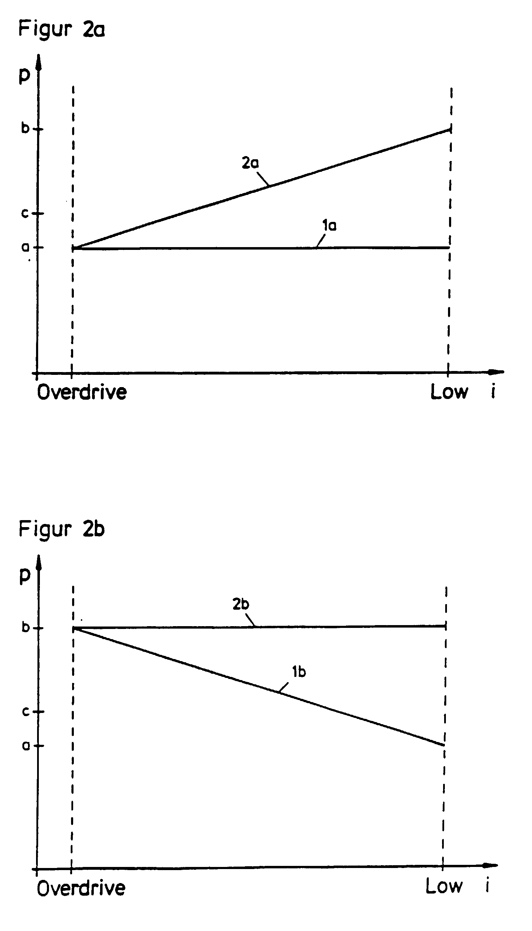

In der nicht vorveröffentlichten DE 43 40 431.6 A1 (WO-A-95-14872) ist eine Hydrauliknotsteuerung für ein elektronisch gesteuertes, kontinuierlich variables Getriebe (continuously variable transmission, CVT) beschrieben. Das CVT-Getriebe, das vorzugsweise in Personenkraftwagen verwendet wird, weist eine Steuerung für den Notfahrbetrieb auf, die bei einem Ausfall der elektrohydraulischen Ansteuerung für den Normalfahrbetrieb eine Spannung des Übertragungsmittels mit einfachen hydraulischen Mitteln gewährleistet. Diese Mittel werden in der Beschreibung zu den Figuren 1, 2a und 2b angegeben. Sie gewähren zum einen ein Anfahren unter Vollast ohne Durchrutschen des Übertragungsmittels und ermöglichen zum anderen nach dem Anfahren eine Getriebeverstellung von einer hohen Anfahrübersetzung zu einer niedrigen Overdrive-Übersetzung.

In der ebenfalls nicht vorveröffentlichten DE 44 10 311.4 A1 ist nur eine Regelgetriebesteuerung und keine Notsteuerung für ein Getriebe dargestellt. Die dazu notwendige Drossel, die die Notsteuerung bewirken würde, ist nicht vorhanden. Bei der Getriebesteuerung nach der EP-A 27 672 erfolgt die Öldruckbegrenzung für den Kolbenraum nicht durch den Öldruck, sondern durch ein mechanisches, einstellbares Gestänge.

### Vorteile der Erfindung

Die erfindungsgemäße Hydrauliknotsteuerung wird benötigt, um ein stufenlos übersetzendes Umschlingungsgetriebe ohne die Unterstützung einer im Normalfahrbetrieb aktiven elektrohydraulischen Ansteuerung in einem Notfahrbetrieb benutzen zu können. Die Notsteuerung soll dabei ein Anfahren unter Vollast erlauben, ohne daß am Umschlingungsgetriebe die zulässige Schlupfgrenze überschritten wird. Ferner soll eine drehzahlabhängige Übersetzungssteuerung eine Getriebeverstellung über den gesamten Übersetzungsbereich erlauben. Hierbei soll die Hydrauliknotsteuerung die hydraulischen Axialverstellungen der Kegelscheiben bei Gewährleistung der notwendigen Übertragungsmittelspannung derart mit Öldruck beaufschlagen, daß die für den Notfahrbetrieb bekannten maximalen Öldrücke, die teilweise über den gesamten Übersetzungsbereich gehalten werden, außerhalb des Anfahrbereichs abgesenkt werden. Durch eine Senkung der einzelnen Öldrücke wird die Belastung der hydraulischen Bauteile vermindert und die Verluste sowie der Verschleiß am Übertragungsmittel durch ein Herabsenken der auf die Übertragungsmittelglieder wirkenden Flächenpressung reduziert.

Bei der erfindungsgemäßen Hydrauliknotsteuerung wird dazu eine Öldruckbegrenzung für den Kolbenraum einer zweiten Kegelscheibenaxialverstellung eingesetzt, die abhängig vom Öldruck im Kolbenraum der Axialverstellung eines ersten Kegelscheibenpaares gesteuert wird. Bei den weiteren Ausführungen entspricht die zweite Kegelscheibenaxialverstellung der abtriebsseitigen oder sekundärseitigen Kegelscheibenaxialverstellung, während die Axialverstellung des antriebsseitigen bzw. primärseitigen Kegelscheibenpaares für die erste Kegelscheibenaxialverstellung steht. Prinzipiell ist auch eine andere Zuordnung denkbar.

Zur übersetzungsabhängigen Öldrucksteuerung des abtriebsseitigen Kegelscheibenanpreßdruckes wird parallel zu einem vorhandenem Druckbegrenzungsventil ein ferngesteuertes Druckventil angeordnet, das mit Hilfe des Öldrucks aus dem antriebsseitigen Kolbenraum angesteuert wird. Dieses Druckventil öffnet bei dem Erreichen des im antriebsseitigen Kolbenraum zulässigen Öldrucks und senkt den abtriebsseitigen Öldruck ab. Alternativ zu diesem separaten Druckventil können auch das Druckventil und das Druckbegrenzungsventil in einem ferngesteuerten Druckbegrenzungsventil zusammengefaßt werden. Dazu werden Mittel vorgesehen, die die Fernsteuerung nur im Notfahrbetrieb zulassen. Diese Mittel können ein zusätzliches Ventil sein, das die Fernsteuerung bei Ausfall der elektrischen Ansteuerung unterbricht und sperrt. Es kann auch eine Ventilerweiterung für beispielsweise das Ventil sein, das die Drosselstelle für den Abgriff des motordrehzahlabhängigen Druckgefälles bei einem Notfahrbetrieb zuschaltet. Alle für den Notfahrbetrieb erforderlichen Ventile können elektrisch oder hydraulisch betätigt werden.

Die erfindungsgemäße Hydraulikschaltung bewirkt besonders bei längeren Übersetzungen einen fallenden abtriebsseitigen und einen geringfügig steigenden antriebsseitigen Öldruck. Letzterer übersteigt nicht den zugelassenen Grenzwert. Dadurch wird zum einen die Lebensdauer der Pumpe und der die Axialverstellungen der Kegelscheiben bewirkenden Hydraulikaggregate erhöht und zum anderen die Standzeit des Übertragungsmittels verbessert.

### Zeichnungen

Zwei Ausführungsbeispiele der Erfindung sind neben dem Stand der Technik in den Zeichnungen schematisch in Form von Hydraulikschaltplänen dargestellt und in der nachfolgenden Figurenbeschreibung auch mit Hilfe von vereinfacht bzw. idealisiert dargestellten Diagrammen näher erläutert. Es zeigen
- Figur 1: eine Hydrauliknotsteuerung nach dem Stand der Technik,
- Figur 2a: ein p/i-Diagramm für Primär- und Sekundäröldruckverlauf im Normalbetrieb bei nicht aktivierter Notsteuerung aus Figur 1,
- Figur 2b: ein p/i-Diagramm für Primär- und Sekundäröldruckverlauf für die Notsteuerung aus Figur 1,
- Figur 2c: ein p/i-Diagramm für Primär- und Sekundäröldruckverlauf für die neue Notsteuerung aus Figur 3,
- Figur 2d: ein p/i-Diagramm für Primär- und Sekundäröldruckverlauf für die neue Notsteuerung aus Figur 4,
- Figur 3: eine Hydrauliknotsteuerung mit separatem primäröldruckgesteuerten Druckventil,
- Figur 4: eine Hydrauliknotsteuerung mit einem primäröldruckgesteuerten Druckregelventil mit Unterbrechung der Primärdrucksteuerleitung im Normalbetrieb,
- Figur 5: eine Hydrauliknotsteuerung mit einem primäröldruckgesteuerten Druckregelventil ohne Unterbrechung der Primärdrucksteuerleitung im Normalbetrieb,
- Figur 6a: eine Hydrauliknotsteuerung, wie in Figur 4, mit direkter Verbindung zwischen der Pumpe und dem sekundärseitigen Kolbenraum,
- Figur 6b: eine Hydrauliknotsteuerung, wie in Figur 6a, mit einer Druckbegrenzungssteuerung über den Pumpendruck.

### Beschreibung der Ausführungsbeispiele

Figur 1 zeigt einen, dem Stand der Technik entsprechenden Ausschnitt aus einem Hydraulikschaltplan zur Steuerung der Hydrauliköldrücke der an- und abtriebsseitigen Druckzylinder eines stufenlos übersetzenden Umschlingungsgetriebes. Das bekannte Umschlingungsgetriebe (10) umfaßt zwei Kegelscheibenpaare zwischen denen ein Übertragungsmittel (14), beispielsweise ein Schubgliederband, eine Kette, ein Keilriemen oder dergleichen, angeordnet ist. Beide Kegelscheibenpaare bestehen jeweils aus zwei Kegelscheiben (11, 12; 15, 16), die hydraulisch gegeneinander verspannbar ausgebildet sind. Die dazu notwendigen Kolben- und Zylinderteile sind vorzugsweise zumindest in einem Teil der Kegelscheiben integriert. Die von diesen Teilen eingeschlossenen Kolbenräume, auf der Primärseite der Kolbenraum (13) und auf der Sekundärseite der Kolbenraum (17), werden entsprechend der eingestellten Übersetzung mit dem jeweiligen Arbeitsdruck beaufschlagt.

In den hier beschriebenen Ausführungen ist der erforderliche abtriebsseitige Sekundärdruck größer oder gleich dem notwendigen antriebsseitigen Primärdruck. Während des Normalfahrbetriebes, bezüglich der Ventilstellungen in Figur 1 nicht dargestellt, werden die Kolbenräume (13) und (17) über eine beispielsweise vom Fahrzeugmotor angetriebene hydrostatische Pumpe (80) mit Hydrauliköl versorgt. Die Pumpe (80) fördert das Druckmittel über eine Arbeitsleitung (102), ein in Schaltstellung 2 befindendes 2/2-Wegeventil (70), das mit einer linksseitigen elektrischen Betätigung (72) und einer rechtsseitigen Rückstellfeder (71) ausgestattet ist, eine Arbeitsleitung (103) und eine Arbeitsleitung (105) in den sekundärseitigen Kolbenraum (17). Der Druck in der Arbeitsleitung (105) bzw. dem Kolbenraum (17) wird mittels eines Drucksensors (95) erfaßt. Zur Steuerung des gemessenen Hydrauliköldrucks wird ein 2/2-Wegefühlerventil (30) mit einer linksseitigen Rückstellfeder (31) und einer rechtsseitigen, regelbaren elektrischen Betätigung (32) verwendet. Das Fühlerventil (30) ist an der Leitungsverbindung zwischen den Arbeitsleitungen (103) und (105) über die Arbeitsleitung (106) angeschlossen. Entsprechend seiner elektrisch eingestellten, einem vorgegebenen Getriebebetriebszustand entsprechenden Zwischenstellung wird der mittels des Drucksensors (95) erfaßte Sekundäröldruck auf das für die Bandspannung im Übertragungsmittel (14) erforderliche Niveau abgesenkt. Hierzu wird das von der Pumpe (80) geförderte und für die Kegelscheibenverstellung nicht benötigte Hydrauliköl in die Arbeitsleitung (108) mit niedrigerem Druckniveau weitergeleitet. Von der Arbeitsleitung (108) aus kann das Hydrauliköl weiteren Antriebsbaugruppen, wie z.B. einer Kupplung, einem Wandler oder der Schmierung zur Verfügung stehen.

Der Hydrauliköldruck im Kolbenraum (17) wird u.a. als Funktion des Übersetzungsverhältnisses i, (i=n_{Antrieb}/n_{Abtrieb}) und des zu übertragenden Motordrehmoments geregelt, vgl. Figur 2a. Das Diagramm stellt die primär- und sekundärseitigen Hydrauliköldruckverläufe (1a) und (2a) über dem Übersetzungsverhältnis i beispielsweise bei maximalem Motordrehmoment schematisch dar. Der Sekundäröldruck, vgl. Kennlinie (2a) ist in der Anfahrphase bei dem höchsten Übersetzungsverhältnis und größten Motordrehmoment, hier mit "Low" bezeichnet, maximal. Er fällt mit sinkendem Übersetzungsverhältnis. Sein Minimum erreicht er in der Overdrive-Stellung des Getriebes.

Unterhalb der Kennlinie (2a) ist die Kennlinie (1a) des an der Kolbenkammer (13) anliegenden Primäröldrucks dargestellt. Der dortige Hydrauliköldruck, vgl. Figur 1, wird mit Hilfe eines 3/2-Wegefühlerventils (20) eingestellt. Dieses über eine Arbeitsleitung (109) aus der sekundären Arbeitsleitung (105) versorgte Primärdruckventil (20) ist über eine Arbeitsleitung (110) an der Kolbenkammer (13) angeschlossen. Es weist neben einer beidseitigen hydraulischen Betätigung linksseitig eine Rückstellfeder (21) und rechtsseitig eine regelbare elektrische Betätigung (22) auf. Die Drücke in den am Fühlerventil (20) an den Steueranschlüssen (25) und (26) adaptierten Steuerleitungen (23) und (24) beeinflussen die elektrische Verstellung dieses Fühlerventils (20) nicht, da sie bei betätigtem Ventil (70), also bei dort nahezu ungedrosselter Schaltstellung, den gleichen Wert haben.

Bei einem Ausfall der Ansteuerelektronik werden die Ventile (70) und (30) von ihren Rückstellfedern (71) und (31) in die Schaltstellungen 1 bewegt. Das von der Pumpe (80) geförderte Hydrauliköl wird zunächst von einem im Ventil (70) integrierten Drossel- oder Blendenventil (73) gedrosselt, um dann über die Arbeitsleitungen (103) und (104) durch das Druckbegrenzungsventil (40) und die Arbeitsleitungen (107) und (108) mit niedrigem Druckniveau abgeleitet zu werden. In den vor und nach dem Drosselventil (73) angeschlossenen Steuerleitungen (23) und (24) wird das dort anliegende Druckgefälle an die Steuereingänge (25) und (26) des Primärdruckventils (20) weitergegeben. Hierbei wird vorausgesetzt, daß sich die Fördermenge der Pumpe (80) zumindest in dem für die Übersetzungsverstellung relevanten Drehzahlbereich als Funktion der Drehzahl ändert. Das Drosselventil (73), die wirksamen Flächen des Schiebers des Ventils (20) im Bereich der Steuereingänge (25) und (26) sowie die Rückstellfeder (21) sind derart aufeinander abgestimmt, daß sich das Ventil (20) bei der für die Kegelscheibenverstellung vorgesehenen Motordrehzahl näherungsweise in mittlerer Schließstellung befindet. Steigt die Motordrehzahl weiter an, öffnet das Ventil (20) infolge des höheren Druckabfalls am Drosselventil (73) zunehmend, womit Hydrauliköl aus der Arbeitsleitung (109) über die primärseitige Arbeitsleitung (110) in den Kolbenraum (13) gelangt. Folglich verringert sich das Übersetzungsverhältnis i in Richtung "Overdrive", bis die Motordrehzahl wieder die für den Notfahrbetrieb vorgesehene Solldrehzahl erreicht hat.

Bei sinkender Motordrehzahl bewegt sich der Schieber des Ventils (20) in Richtung auf die Schaltstellung 1, wodurch das Hydrauliköl aus dem Kolbenraum (13) in den Tank abfließen kann. In diesem Fall vergrößert sich das Übersetzungsverhältnis i in Richtung "Low". Folglich steigt die Motordrehzahl wieder.

Auf diese Weise kann die Getriebeübersetzung von "Low" bis "Overdrive" bei annähernd konstanter Motordrehzahl verstellt werden.

Die beiden Öldruckkennlinien (1b) und (2b) für den Notfahrbetrieb sind der Figur 2b zu entnehmen. Der Sekundäröldruck, vgl. Kennlinie (2b), befindet sich über den gesamten Übersetzungsbereich auf einem hohen Druckniveau "b", das mittels des Druckbegrenzungsventils (40) eingestellt ist. Der Primäröldruck, vgl. Kennlinie (1b), steigt dagegen nach dem Anfahren von einem minimalen Druck "a" bis zum Erreichen des OverdriveBereichs auf den maximalen Druck "b" an.

Derartige Öldruckverläufe führen i.a. bei Umschlingungsgetrieben, die für den Normalfahrbetrieb entsprechend der Öldruckverläufe nach Figur 2a ausgelegt sind, zu erheblichen Standzeitverlusten. Denn in der Regel sind für solche Getriebe die Hydraulikpumpen derart konzipiert, daß sie den maximalen Öldruck "b" nur kurzzeitig während des Anfahrvorganges standhalten müssen. Folglich senkt ein längeres Halten des hohen Öldrucks "b" die Lebensdauer der Pumpe (80). Ferner sind die für die Axialverstellung des primärseitigen Kegelscheibenpaares (11, 12) verwendeten Kolben- und Zylinderteile vorzugsweise für einen Öldruck "c", vgl. Figur 2a, ausgelegt, der aufgrund eines Sicherheitsfaktors über dem erforderlichen Öldruck "a" liegt. Im Notfahrbetrieb übersteigt bei der bekannten Notsteuerung der Primäröldruck jedoch den Wert "c" erheblich, vgl. Kennlinie (1b) in Figur 2b, besonders bei den längeren Übersetzungen in Richtung "Overdrive". Die hohen Dauerdruckwerte führen unausweichlich zu Schäden an der primärseitigen hydraulischen Axialverstellung. Die primär- und sekundärseitigen Öldrücke können bekanntermaßen nur verringert werden, in dem das vom Getriebe zu übertragende Drehmoment gesenkt wird.

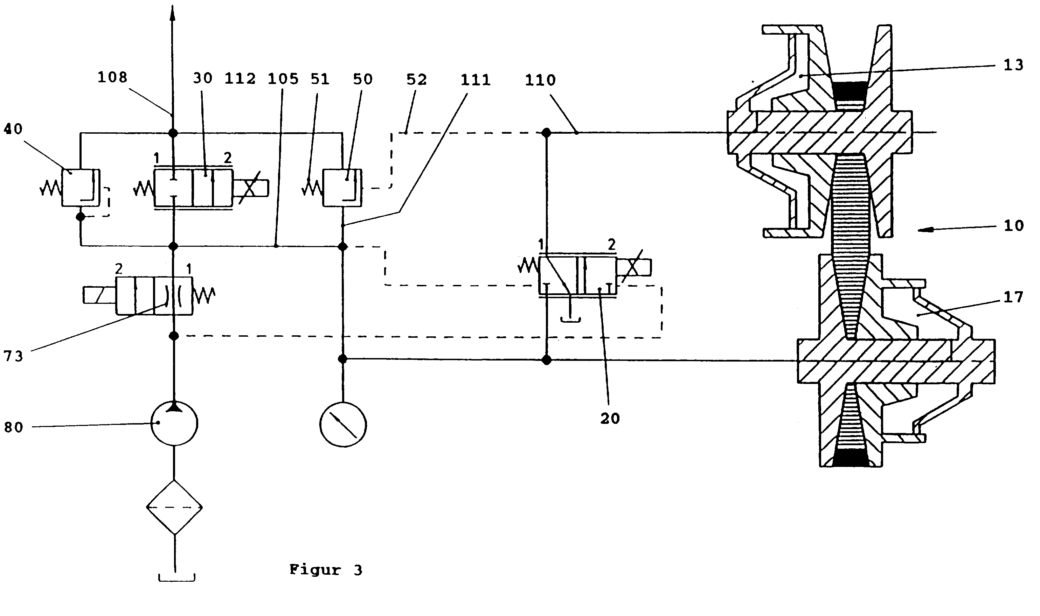

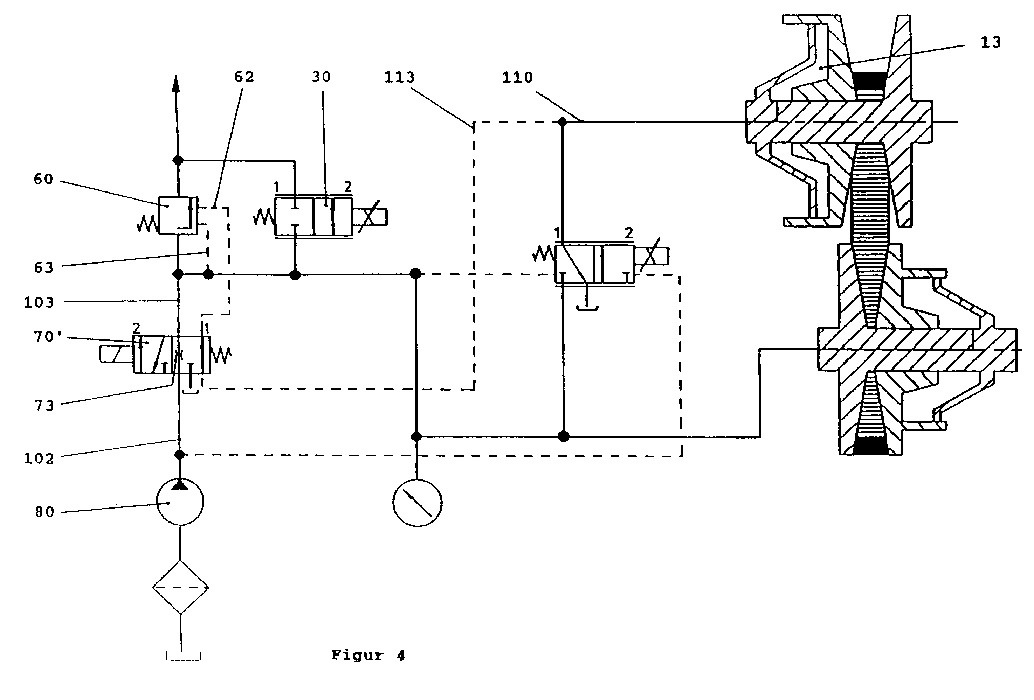

Zur Vermeidung der genannten Probleme werden mit Hilfe der in den Figuren 3 und 4 dargestellten Hydrauliknotsteuerungen während des Notfahrbetriebes die Hydrauliköldrücke nach dem Anfahren abgesenkt oder zumindest auf einem zulässigen Niveau gehalten.

Dazu ist in dem in Figur 3 dargestellten Hydraulikschaltplan ein ferngesteuertes Druckventil (50) parallel zu dem 2/2-Wegefühlerventil (30) geschaltet. Das Druckventil (50), das links eine Rückstellfeder (51) aufweist und rechts über eine Steuerleitung (52) an der Arbeitsieitung (110) angeschlossen ist, steuert über die Arbeitsleitungen (111) und (112) neben dem Druckbegrenzungsventil (40) die Entlastung der sekundären Arbeitsleitung (105) in die Arbeitsleitung (108).

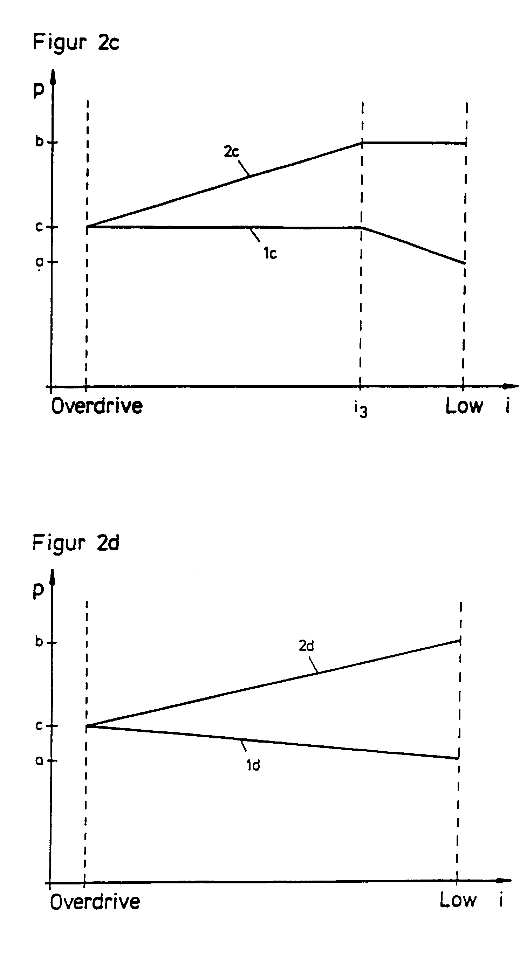

Während des Normalfahrbetriebes hat das Druckventil (50) keinen Einfluß auf den Sekundäröldruck, da u.a. bei einem niedrigen Primäröldruck, vgl. Figur 2a, Kennlinie 1a, das Druckventil (50) durch die Rückstellfeder (51) geschlossen ist. Dagegen öffnet es im Notfahrbetrieb, sobald der Primäröldruck einen Grenzwert überschritten hat, der gemäß der Figur 2c mit dem Druckniveau "c" bezeichnet ist, und bei einem Übersetzungsverhältnis i₃ auftritt. Die idealisiert dargestellten Kennlinien für die beiden Hydrauliköldrücke haben dann beispielsweise den hier gezeigten Verlauf. Der Sekundäröldruck, vgl. Kennlinie (2c) wird während des Anfahrens zunächst durch das Druckbegrenzungsventil auf den Öldruck "b" begrenzt. In dieser Phase steigt der Primäröldruck, wie aus Figur 2b bekannt, u.a. mit abnehmendem Übersetzungsverhältnis von dem Öldruck "a" auf den Öldruck "c". Wird letzterer erreicht, öffnet das ferngesteuerte Druckventil (50). In der Folge wird bei einer weiteren Abnahme des Übersetzungsverhältnisses i in Richtung "Overdrive" der Primäröldruck als Funktion der Federrate der Rückstellfeder (51), des Öffnungshubs und des Kolbenquerschnitts des Druckventils (50) annähernd konstant auf dem Druckniveau "c" gehalten, während der Sekundäröldruck abnimmt. Die Pumpe (80) muß demnach nur noch kurzzeitig den maximalen Sekundärdruck zur Verfügung stellen. Auch die Kolben- und Zylinderteile des primärseitigen Kolbenraumes (13) können weiterhin für den Öldruck "c" ausgelegt bleiben.

Alternativ hierzu ist in Figur 4 eine Hydraulikschaltung dargestellt, bei der im Notfahrbetrieb die Funktionen des Druckbegrenzungsventils (40) und des Druckventils (50) aus Figur 3 u.a. von einem ferngesteuerten Druckbegrenzungsventil (60) übernommen werden. Das Ventil (60) das innerhalb des Schaltplans die Position des Ventils (40) aus Figur 3 übernimmt, ist zusätzlich über die Steuerleitung (62) ferngesteuert. Die Steuerleitung (62), die neben der regulären Steuerleitung (63) angeschlossen ist, bezieht ihren Steuerdruck über die Steuerleitung (113) aus der Arbeitsleitung (110) bzw. dem Primärkolbenraum (13). Zwischen den Steuerleitungen (113) und (62) ist ein 5/2-Wegeventil (70') angeordnet, das das Ventil (70) aus den Figuren 1 und 3 ersetzt. Als Zusatzfunktion gibt es im Notfahrbetrieb, bei Schaltstellung 1 die Steuerleitungen (113) und (62) zur Fernsteuerung des Druckbegrenzungsventils (60) frei. Im Normalfahrbetrieb nimmt das Ventil (70') die Schaltstellung 2 ein, womit die Fernsteuerung des Ventils (60) entfällt, die Steuerleitung (113) verschlossen und die Steuerleitung (62) in den Tank entlastet wird. Für das Ventil (70') kann auch ein 4/2-Wegeventil verwendet werden, das die Steuerleitungen (113) und (62) in der Schaltstellung 1 verbindet und in der Schaltposition 2 trennt und separat verschließt. Die Notschaltung hat den in Figur 2d dargestellten Einfluß auf den primär- und sekundärseitigen Öldruckverlauf.

Des weiteren besteht auch die Möglichkeit, die Ventile (60) und (30) in einem elektrisch betätigbaren Fühlerventil zusammenzufassen, das dann die Funktionen beider Ventile übernimmt.

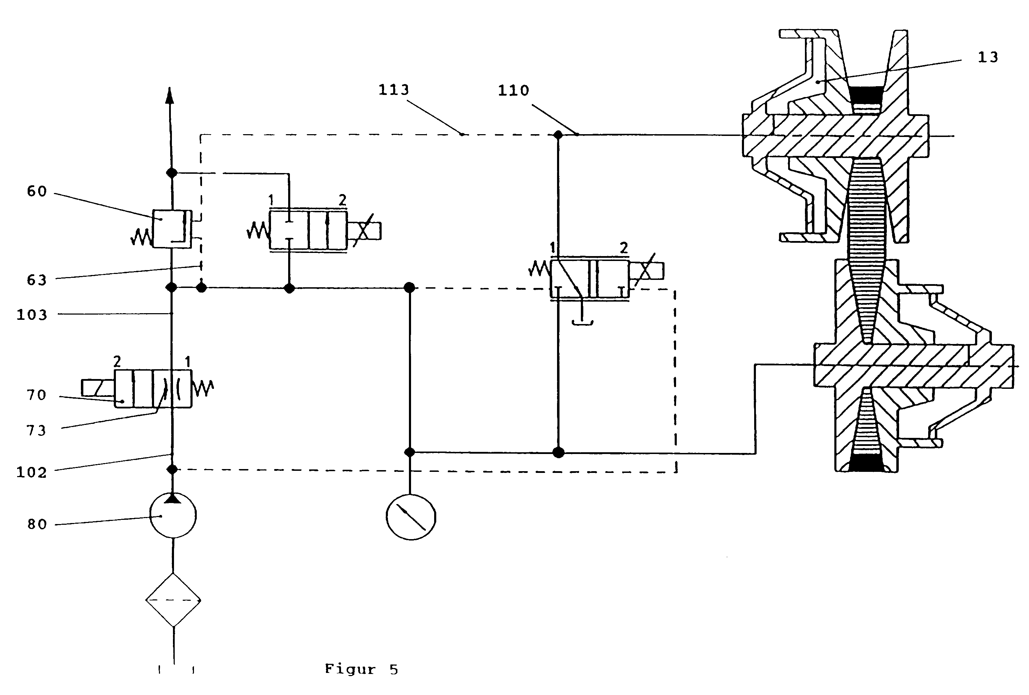

Eine zusätzliche Variante von Figur 4 stellt der Hydraulikschaltplan nach Figur 5 dar. Dort ist die primärseitige Steuerleitung (113) direkt mit dem Druckbegrenzungsventil (60) verbunden, d.h. der Primärdruck liegt sowohl im Normalfahrbetrieb als auch im Notfahrbetrieb am Ventil (60) an.

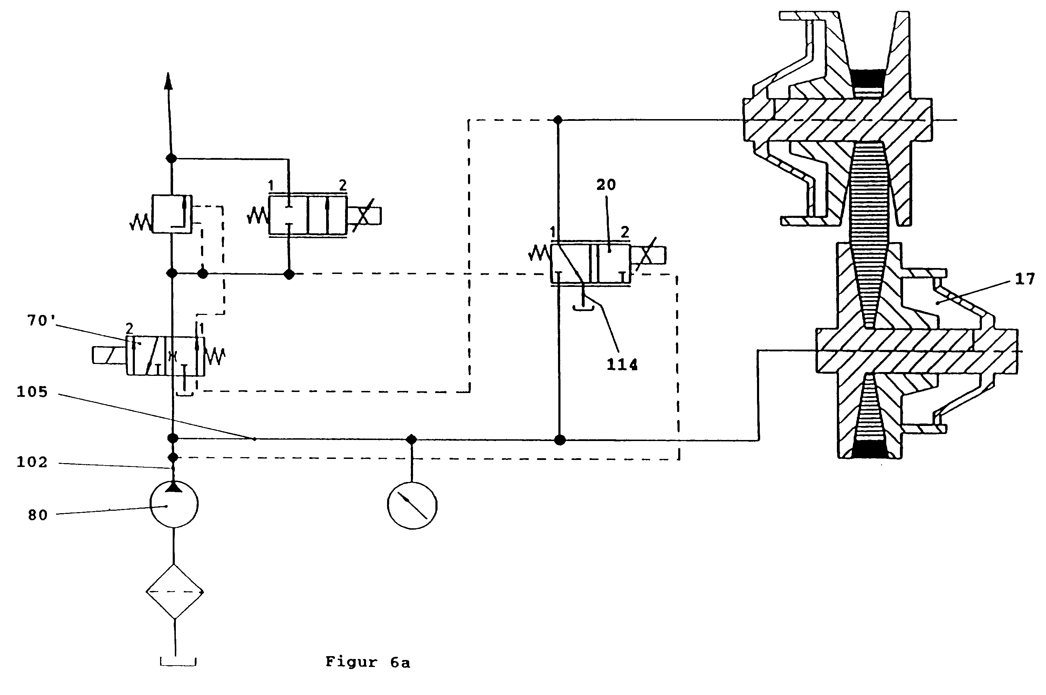

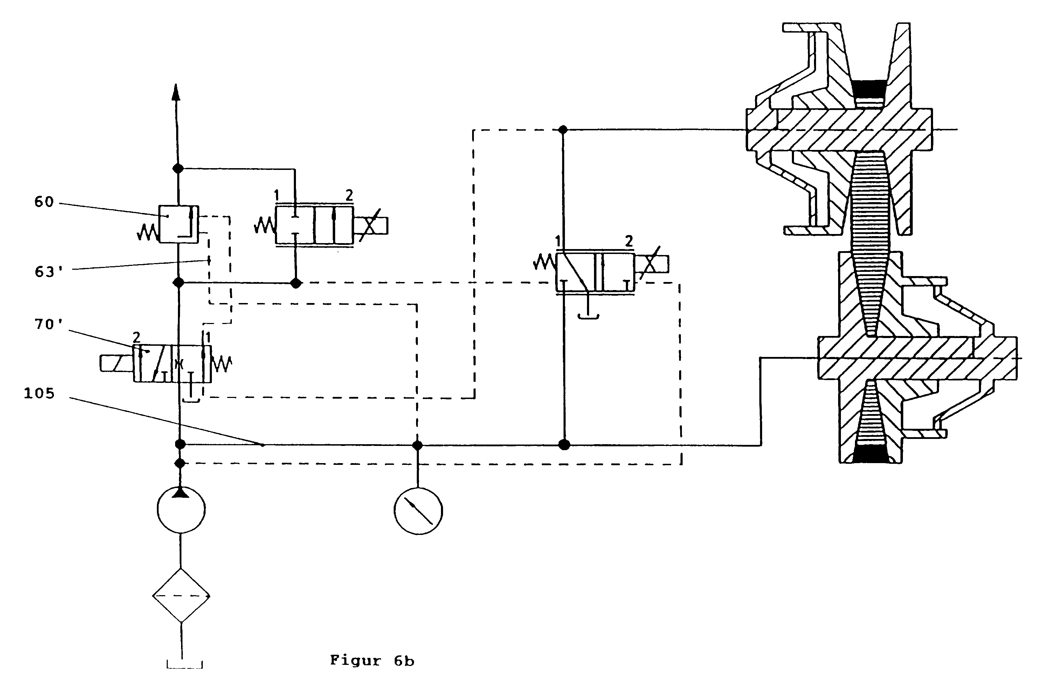

Den Figuren 6a und 6b ist jeweils eine Hydraulikschaltung zu entnehmen, bei der die sekundäre Arbeitsleitung (105) vor dem Ventil (70') aus der Arbeitsleitung (102) abzweigt. Bei dieser Variante kann die Pumpe (80) in unmittelbarer Nähe des sekundärseitigen Kolbenraums (17) angeordnet werden. Das verringert den Bauraum der Konstruktion und senkt die Leitungsverluste zwischen beiden Baugruppen. Zusätzlich kann in die Rücklaufleitung (114) ein Drossel- oder Blendenventil zugeschaltet werden. Die Drosselwirkung, die nur im Notfahrbetrieb benötigt wird, kann auch durch eine Hubbegrenzung für den Schieber des Ventils (20) erzeugt werden.

Bei dem Hydraulikschaltplan in Figur 6b ist die Steuerleitung (63') zur Fernsteuerung des Druckbegrenzungsventils (60) an der Arbeitsleitung (105) direkt angeschlossen. Dadurch wird der Pumpendruck unmittelbar zur Fernsteuerung verwendet. Dies erweist sich als günstig bei höheren Fahrgeschwindigkeiten im Overdrive-Bereich bzw. bei großen Volumenströmen.

## Patentansprüche

1. Hydrauliknotsteuerung für eine übersetzungsabhängige Änderung der Hydrauliköldrücke in einer ersten und einer zweiten Hydraulischen Kegelscheibenaxialverstelleinrichtung eines stufenlosen Umschlingungsgetriebes (10), bei der eine Pumpe (80) zumindest den Kolbenraum (17) der zweiten Axialverstelleinrichtung versorgt und ein nachgeschaltetes Druckbegrenzungsventil (40) den dortigen Öldruck begrenzt und ferner aus dieser Versorgung über ein Fühlerventil (20) den Kolbenraum (13) der ersten Axialverstelleinrichtung speist, dadurch gekennzeichnet, daß das Fühlerventil (20) mit Hilfe eines an einem der Pumpe (80) nachgeordneten Drosselventil (73) anliegenden Druckgefälles gesteuert wird und daß die Öldruckbegrenzung zumindest für den Kolbenraum (17) abhängig vom Öldruck im Kolbenraum (13) gesteuert wird.

2. Hydrauliknotsteuerung gemäß Anspruch 1, dadurch gekennzeichnet, daß zur übersetzungsabhängigen Öldrucksteuerung parallel zu dem Druckbegrenzungsventil (40) ein ferngesteuertes Druckventil (50) angeordnet ist.

3. Hydrauliknotsteuerung gemäß Anspruch 2, dadurch gekennzeichnet, daß das Druckventil (50) ein Federelement (51) aufweist, dessen Federkraft dem Produkt aus der Druckventilkolbenfläche und dem Steuerdruck der Steuerleitung (52) entgegenwirkt.

4. Hydrauliknotsteuerung gemäß Anspruch 2, dadurch gekennzeichnet, daß das Druckventil (50) bei Erreichen des im Kolbenraum (13) zulässigen Öldrucks öffnet.

5. Hydrauliknotsteuerung gemäß Anspruch 2 und 3, dadurch gekennzeichnet, daß die Federkraft des Federelements (51) des Druckventils (50) einstellbar ist.

6. Hydrauliknotsteuerung gemäß Anspruch 5, dadurch gekennzeichnet, daß die Federkennlinie des Federelements (51) des Druckventils (50) nicht linear ist.

7. Hydrauliknotsteuerung nach einem der vorangehenden Ansprüche, dadurch gekennzeichnet, daß parallel zu dem Druckbegrenzungsventil (40) ein elektrisch oder hydraulisch angesteuertes Fühlerventil (30) zur Regelung des sekundärseitigen Öldruckes im Normalfahrbetrieb angeordnet ist.

8. Hydrauliknotsteuerung gemäß Anspruch 1, dadurch gekennzeichnet, daß zur übersetzungsabhängigen Öldrucksteuerung ein Druckbegrenzungsventil (60) über eine mit dem primären Kolbenraum (13) verbundenen Steuerleitung (62, 113) ferngesteuert wird.

9. Hydrauliknotsteuerung gemäß Anspruch 8, dadurch gekennzeichnet, daß die Steuerleitungen (62) und (113) im Normalfahrbetrieb voneinander getrennt und einzeln gesperrt sind.

10. Hydrauliknotsteuerung gemäß der Ansprüche 8 und 9, dadurch gekennzeichnet, daß die Steuerleitungen (62) und (113) durch ein 5/2-Wegeventil (70') getrennt werden, das im Notfahrbetrieb federkraftbetätigt zum einen die Steuerleitungen (62) und (113) verbindet und zum anderen die von der Pumpe (80) kommende Arbeitsleitung (102) über das Drosselventil (73) mit der Arbeitsleitung (103) zusammenschaltet, während es im Normalfahrbetrieb elektrisch oder hydraulisch betätigt einerseits die Steuerleitung (113) sperrt sowie die Steuerleitung (62) in den Tank entlastet und andererseits die Arbeitsleitung (102) direkt mit der Arbeitsleitung (103) verbindet.

11. Hydrauliknotsteuerung nach einem der vorangehenden Ansprüche, dadurch gekennzeichnet, daß das Druckbegrenzungsventil (60) zusätzlich elektrisch oder hydraulisch angesteuert ist und dieses Ventil (60) die Öldruckregelfunktion des Fühlerventils (30) für den Normalfahrbetrieb übernimmt.

## Claims

1. Hydraulic emergency control for a transmission-ratio-dependent change in the hydraulic oil pressures in first and second hydraulic cone-pulley-axial-adjustment devices of a continuously variable belt-and-pulley transmission (10), in which hydraulic emergency control a pump (80) supplies at least the piston space (17) of the second axial-adjustment device, and a downstream pressure-limiting valve (40) limits the oil pressure there and also feeds the piston space (13) of the first axial-adjustment device from this supply via a sensing valve (20), characterized in that the sensing valve (20) is controlled by means of a pressure gradient applied to a choke valve (73) arranged downstream of the pump (80), and in that the oil-pressure limit, at least for the piston space (17), is controlled as a function of the oil pressure in the piston space (13).

2. Hydraulic emergency control according to Claim 1, characterized in that, to control the oil pressure as a function of the transmission ratio, a remote-controlled pressure valve (50) is arranged in parallel with the pressure-limiting valve (40).

3. Hydraulic emergency control according to Claim 2, characterized in that the pressure valve (50) has a spring element (51), the spring force of which counteracts the product of the pressure-valve piston area and the control pressure of the control line (52).

4. Hydraulic emergency control according to Claim 2, characterized in that the pressure valve (50) opens when the oil pressure admissible in the piston space (13) is reached.

5. Hydraulic emergency control according to Claims 2 and 3, characterized in that the spring force of the spring element (51) of the pressure valve (50) is adjustable.

6. Hydraulic emergency control according to Claim 5, characterized in that the spring characteristic of the spring element (51) of the pressure valve (50) is non-linear.

7. Hydraulic emergency control according to one of the preceding claims, characterized in that an electrically or hydraulically activated sensing valve (30) for controlling the secondary-side oil pressure in normal driving operation is arranged parallel to the pressure-limiting valve (40).

8. Hydraulic emergency control according to Claim 1, characterized in that, to control the oil pressure as a function of the transmission ratio, a pressure-limiting valve (60) is remotely controlled via a control line (62, 113) connected to the primary piston space (13).

9. Hydraulic emergency control according to Claim 8, characterized in that the control lines (62) and (113) are separate from one another and blocked individually in normal driving operation.

10. Hydraulic emergency control according to Claims 8 and 9, characterized in that the control lines (62) and (113) are separated by a 5/2-way directional valve (70'), which in emergency driving operation, in a spring-force-actuated manner, connects the control lines (62) and (113) on the one hand and couples the working line (102), coming from the pump (80), to the working line (103) via the choke valve (73) on the other hand, whereas in normal driving operation, in an electrically or hydraulically actuated manner, it blocks the control line (113) and relieves the control line (62) into the tank on the one hand and connects the working line (102) directly to the working line (103) on the other hand.

11. Hydraulic emergency control according to one of the preceding claims, characterized in that the pressure-limiting valve (60) is additionally activated electrically or hydraulically, and this valve (60) takes over the oil-pressure-control function of the sensing valve (30) for normal driving operation.

## Revendications

1. Commande hydraulique de secours pour modifier la pression du liquide hydraulique en fonction de la démultiplication dans une première et une seconde installation de réglage axial hydraulique des poulies coniques d'un variateur continu à courroie (10), dans lequel une pompe (80) alimente au moins la chambre de piston (17) de la seconde installation de réglage axial et une soupape de limitation de pression (40), en aval, limite la pression hydraulique correspondante et en outre cette alimentation alimente la chambre de piston (13) de la première installation de réglage axial par le distributeur à capteur (20),
caractérisée en ce que
- le distributeur à capteur (20) est commandé à l'aide d'une chute de pression appliquée par une soupape d'étranglement (73) en aval de la pompe (80) et
- la limitation de la pression du liquide hydraulique est commandée au moins pour la chambre de piston (17) en fonction de la pression du liquide dans la chambre de piston (13).

2. Commande hydraulique de secours selon la revendication 1,
caractérisée en ce que
pour la commande de la pression du liquide hydraulique en fonction de la démultiplication, on a une soupape de limitation de pression (50) télécommandée, en parallèle à la soupape de limitation de pression (40).

3. Commande hydraulique de secours selon la revendication 2,
caractérisée en ce que
la soupape de pression (50) comporte un élément à ressort (51) dont la force de ressort s'oppose au produit de la surface du piston de la soupape de pression et de la pression de commande de la conduite de commande (52).

4. Commande hydraulique de secours selon la revendication 2,
caractérisée en ce que
la soupape de pression (50) s'ouvre lorsqu'on atteint la pression de liquide hydraulique autorisée dans la chambre de piston (13).

5. Commande hydraulique de secours selon les revendications 2 et 3,
caractérisée en ce que
la force de ressort de l'élément à ressort (51) de la soupape de pression (50) est réglable.

6. Commande hydraulique de secours selon la revendication 5,
caractérisée en ce que
la caractéristique de ressort de l'élément de ressort (51) de la soupape de pression (50) n'est pas linéaire.

7. Commande hydraulique de secours selon l'une quelconque des revendications précédentes,
caractérisée en ce qu'
en parallèle à la soupape de limitation de pression (40) il est prévu un distributeur à capteur (30) à commande électrique ou hydraulique pour réguler la pression du liquide hydraulique du côté secondaire pendant le fonctionnement normal.

8. Commande hydraulique de secours selon la revendication 1,
caractérisée en ce que
pour la commande de la pression du liquide hydraulique en fonction de la démultiplication, une soupape de limitation de pression (50) est télécommandé par une conduite de commande (62, 113) relié à la chambre de piston (13) du côté primaire.

9. Commande hydraulique de secours selon la revendication 8,
caractérisée en ce que
les conduites de commande (62), (113) sont séparées et fermées chacune séparément en mode de fonctionnement normal.

10. Commande hydraulique de secours selon les revendications 8 et 9,
caractérisée en ce que
les conduites de commande (62), (113) sont séparées par un distributeur à tiroir à 5/2 voies (70'), qui en fonctionnement de secours, actionné par la force d'un ressort, est relié d'une part aux conduites de commande (62), (113) et d'autre part à la conduite (102) venant de la pompe (80) par l'intermédiaire de la soupape d'étranglement (73) avec la conduite (103) alors qu'en mode normal, actionné par voie électrique ou hydraulique, ce moyen bloque d'une part la conduite de commande (113) et ouvre la conduite de commande (62) vers le réservoir et d'autre part relie directement la conduite (102) à la conduite (103).

11. Commande hydraulique de secours selon l'une quelconque des revendications précédentes,
caractérisée en ce que
la soupape de limitation de pression (60) est commandée en plus de manière électrique ou hydraulique, et la soupape (60) assure pour le fonctionnement normal, la fonction de régulation de la pression du liquide hydraulique du distributeur à capteur (30).
